# EUROPEAN PATENT APPLICATION

(11) **EP 2 395 465 A2**
(43) Date of publication of application: **14.12.2011**
(21) Application number: 10738797.9
(22) Date of filing: 11.01.2010
(51) Int. Cl.: G06Q 30/00

(54) **VENDING SYSTEM**

(30) Priority: 03.02.2009 RU 2009103447
(71) Applicant: Blank, Pol Emanuilovich, Moscow 125319 (RU); Blank, Emanuil Ihilovich, Moscow 125319 (RU)
(72) Inventor: Blank, Pol Emanuilovich, Moscow 125319 (RU); Blank, Emanuil Ihilovich, Moscow 125319 (RU)
(74) Representative: Einsel, Martin
(86) International application number: PCT/RU2010/000005
(87) International publication number: WO 2010/090549

(57) **Abstract**

The invention relates to systems for selling goods and services using a telecommunications network of information and computer resources, in which means for the pneumatic delivery and distribution of goods are used. The technical result is an increase in the functional possibilities of the system. The vending system comprises points of sale of goods and services, which are geographically dispersed and are connected to each other and to a centre that collects information about orders for goods and services and manages the delivery thereof. Each point of sale is provided with a terminal for determining which goods and services are available in the system, a goods warehouse and a goods distribution station, which station is provided with pneumatic delivery means that are connected by pneumatic tubes to the pneumatic delivery means of the goods distribution stations of other points of sale and are also connected to the pneumatic delivery means of the goods warehouse of its own point of sale. All of the terminals are connected via a telecommunications network of information and computer resources to each other and to the aforementioned information collection centre.

## Description

### FIELD OF THE INVENTION

The invention relates to systems for selling goods and services using a telecommunications network of information and computer resources in which means for pneumatic delivery and distribution of goods are used.

### BACKGROUND OF THE INVENTION

An electronic vending system known in prior art comprises a device for delivering information about a transaction; a device for delivering data of the image of at least one item sold through the network; a device for processing invoice payment; a device for processing invoice payment; and a terminal adapted to receive data of the image from said device delivering information about the transaction and requesting invoice payment in the invoice payment processing device, said system further comprising means for adding identification information adapted to provide identification information containing transaction identification information relevant to the item being sold and access identification information relevant to the user's access, and for adding the identification information thus produced to the preset image data delivered by the device for delivering information about the transaction, and means for recording identification information adapted to record the relationship between the transaction identification information and the item being sold and to record the relationship between the access identification information and information indicating the user access terms added by the means for adding identification information (see: Application No. 2002113298 for a Russian Federation patent for an invention, cl. G06F 17/60, 2003).

The prior art system is disadvantageous as it has limited functional capabilities because of the small range of goods sold and services offered at points of sale; a small number of points of sale; a small number of locations having points of sale; a small volume of information exchanged within the system; and the low standards of servicing when payment is made for goods and services and goods are delivered to the buyer.

The prior art closest to the claimed vending system is a shopping complex for selling packaged products through vending machines, said complex comprising a buyer terminal provided with an order inputting device capable of generating an instruction to fulfill the order entered by the buyer, and a product delivering device capable of delivering products in their packaging containers to the buyer; a warehouse product terminal; a pneumatic conveyor system running between said warehouse terminal and said product delivery device, said conveyor system being capable when activated of moving individually packaged products in their packaging containers from the warehouse terminal to said delivery device; a master control device capable of activating said system on instruction to fulfill the order from the order inputting device that is connected logically to a payment device that collects payment for the products or debits payment therefor to the buyer's account; a product loading mechanism connected functionally to the product storage zone and to the pneumatic conveyor system and adapted when activated to load products in their container into the pneumatic conveyor system, the master control device being further capable of activating the product loading mechanism on instruction from the order inputting device (see: Russian Federation Patent No. 2,155,990, cl. G06F 11/46, 2000).

The prior art complex is also disadvantageous since it has limited functional capabilities because of the small range of goods sold and services offered at points of sale; a small number of points of sale; a small number of locations having points of sale; a small volume of information exchanged within the system; and the low standards of servicing when payment is made for goods and services and goods are delivered to the buyer.

### SUMMARY OF THE INVENTION

The technical result to be achieved by the claimed invention consists in correcting the aforesaid deficiencies by, in particular, expanding the functional capabilities of the vending system by broadening the range of goods sold and services offered at points of sale; increasing the number of points of sale and locations having points of sale; enlarging the volume of information exchanged within the system, and improving the standards of servicing when payment is made for the goods and services and the goods are delivered to the buyer.

This technical result is achieved in a vending system that comprises points of sale of goods and services spaced territorially from, and connected with, one another and connected to a center collecting information about goods and services required and managing delivery thereof, each of said points of sale being provided with a terminal determining the goods and services available to the system; a goods warehouse; and a station distributing the goods ordered, which station is equipped with pneumatic delivery means connected, at one side thereof, by pneumatic tubes to the pneumatic delivery means of the stations distributing the goods ordered at the other points of sale and, at the other side thereof, to the pneumatic delivery means provided at the goods warehouse of its own point of sale of goods and services, all the terminals determining the goods and services available to the system being connected through a telecommunications network of information and computer resources (the Internet) to one another and to a center collecting information about orders made for required goods and services and managing delivery thereof, all the goods warehouses and ordered goods distribution stations that are part of the system being connected by electronic communications means incorporated therein, through their respective communications channels, to the center collecting information about orders made for required goods and services and managing delivery thereof, the goods warehouse and ordered goods distribution station of each point of sale being capable of exchanging information through the electronic communications means incorporated therein.

Furthermore, a point of sale of goods and services is located in a residential house, or structure, or in a street pavilion, or in an outdoor or indoor pavilion.

Moreover, the terminal determining the goods and services available to the system allows payment for goods and services to be made in real time by cashless transactions and/or in cash, and also the terminal determining the goods and services available to the system being provided with a display having an active screen presenting the full range of goods and services available in the system.

The claimed technical result is also achieved by the active screen of the display being capable of accepting and registering thereon an order for required sales of goods and services in the system at home, or in office, or outdoors.

In addition, the terminal determining the goods and services available to the system may be connected to an automated teller machine or another payment device located, for example, at a bank office, or an exchange office, or at a financial institution.

Also, the terminal determining the goods and services available to the system may accept and return cash.

Besides, the center collecting information about orders made for required goods and services and managing delivery thereof is capable of processing order-related information, including the code of goods, order date, order volume, price of an item of the goods, name of the point of sale, and name of the recipient of the goods.

The technical result is also achieved by the pneumatic delivery means at the goods warehouses and stations distributing the goods ordered being capable of receiving, delivering, and returning the goods, and also by the pneumatic delivery means at the goods warehouses and stations distributing the goods ordered having pneumatic capsules made of a material absorbing moisture, fats, and dirt of natural or artificial origin.

Moreover, the pneumatic capsules are of the disposable type and also a point of sale of goods and services is provided with video monitoring means, monitoring means using X-ray radiation, and monitoring means using infrared radiation, all said means being connected through a telecommunications network of information and computer resources (the Internet) to one another and to the center collecting information about orders made for required goods and services and managing delivery thereof.

Furthermore, a point of sale of goods and services is provided with electronic and mechanical means to prevent unauthorized access to the system, all said means being connected through the telecommunications network of information and computer resources (the Internet) to one another and to the center collecting information about orders made for required sales goods and services and managing delivery thereof.

Besides, each terminal determining the goods and services available to the system is provided with a device to confirm and block reception and transmission of information packets received and sent, respectively, through the telecommunications network of information and computer resources (the Internet) to the other terminals determining the goods and services available to the system and to the center collecting information about orders made for required sales of goods and services and managing delivery thereof.

In addition, the pneumatic delivery means of the goods warehouse and each station distributing the goods ordered are provided with electronic and mechanical means to prevent unauthorized access of the goods to the system, all said means being connected through the telecommunications network of information and computer resources (the Internet) to one another and to the center collecting information about orders made for required sales of goods and services and managing delivery thereof.

### BRIEF DESCRIPTION OF THE DRAWINGS

The idea of the invention will be clear from the following drawings:
FIG. 1 shows a general circuit diagram of the claimed vending system.
FIG. 2 shows an embodiment of the claimed vending system.

### AN EMBODIMENT OF THE INVENTION

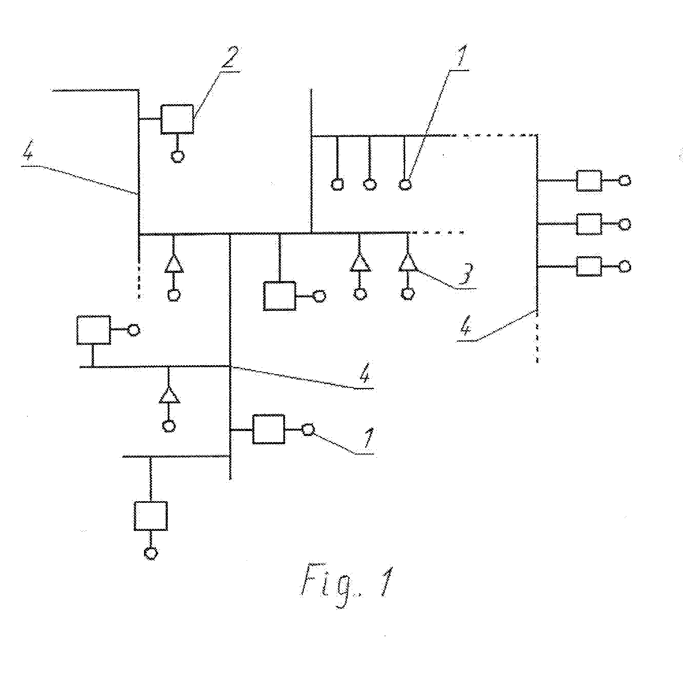

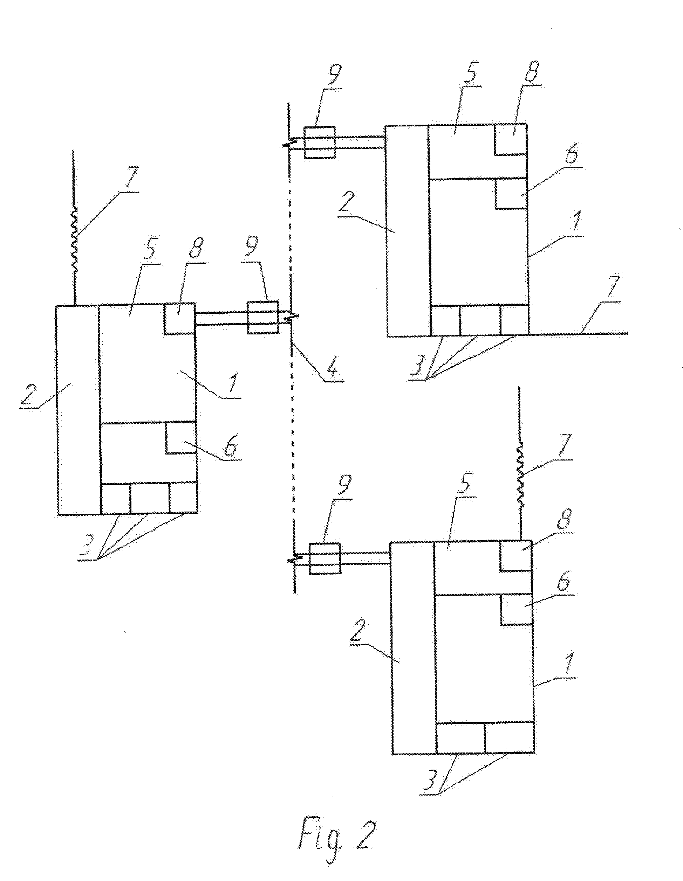

FIG. 1 shows terminals 1 for determining goods and services available to the system, goods warehouses 2, stations 3 for distributing the goods ordered, said stations being equipped with pneumatic delivery means, and pneumatic tubes 4. Each point of sale of goods and services comprises a terminal 1 for determining goods and services available to the system, a goods warehouse 2, and stations 3 for distributing the goods ordered. The vending system also comprises a center collecting information about orders made for required goods and services and for managing delivery thereof (not shown in FIG. 1 and FIG. 2), which center is connected, through the telecommunications network of information and computer resources (the Internet) to the main devices and components of the vending system.

FIG. 2 shows terminals 1 determining goods and services available to the system; goods warehouses 2; stations 3 distributing the goods ordered; pneumatic tubes 4; displays 5 having active screens as parts of terminals 1; devices 6 for cashless payments to be made in real time for the goods and services, said cashless payment devices being part of terminals 1; and communications channels 7 for the electronic communications means provided in the vending system.

FIG. 2 also shows devices 8 provided to confirm and block the reception and transmission of information packets, said devices being part of terminals 1, and video monitoring means 9 at the points of sale of goods and services, which video monitoring means 9 may be alongside monitoring means using X-ray radiation and monitoring means using infrared radiation. The vending system shown in FIG. 2 may include a center collecting information about orders made for required goods and services and for managing delivery thereof (not shown in FIG. 2).

The claimed vending system, therefore, comprises points of sale of goods and services spaced territorially from, and connected to, one another and linked to the center collecting information about orders made for required goods and services and for managing delivery thereof. Each of said points of sale is provided with a terminal 1 determining goods and services available to the system; a goods warehouse 2; and a station 3 distributing the goods ordered, said station being equipped with pneumatic delivery means connected, at one side thereof, by pneumatic tubes 4 to the pneumatic delivery means of ordered goods distribution stations 3 of other points of sale and, at the other side thereof, to the pneumatic delivery means at goods warehouse 2 of its own point of sale of goods and services. All terminals 1 determining goods and services available to the system are connected through the telecommunications network of information and computer resources (the Internet) to one another and to the center collecting information about orders made for required goods and services and managing delivery thereof.

All goods warehouses 2 and stations 3 distributing the goods ordered through their electronic communications means in the system are connected through their respective communications channels 7 to the center collecting information about orders made for required goods and services and managing delivery thereof. Goods warehouse 2 and ordered goods distribution station 3 of each point of sale are capable of exchanging information through their respective electronic communications means.

A point of sale of goods and services may be located in a residential house, or structure, or in a street pavilion, or in an outdoor or indoor pavilion.

Terminal 1 determining goods and services available to the system may be capable of accepting cashless or cash payments for goods and service, or both types of payment in real time.

Terminal 1 determining goods and services available to the system is provided with display 5 having an active screen showing the full range of goods and services available in the system.

The active screen of display 5 is capable of taking and registering thereof an order for required sales of goods and services in the system at home, or in office, or outdoors.

Terminal 1 determining goods and services available to the system may be connected to an automated teller machine or another payment device located, for example, at a bank office, or an exchange office, or at a financial institution.

Terminal 1 determining goods and services available to the system is capable of accepting and returning cash.

The center collecting information about orders made for required goods and services and managing delivery thereof is designed to process information about an order, including the code of the goods, the order placement date, price of an item of goods, name of the point of sale, and name of the recipient of the goods.

The pneumatic delivery means at the goods warehouses and stations distributing the goods ordered are designed to receive, deliver, and return the goods.

The pneumatic delivery means at the goods warehouses and stations distributing the goods ordered have pneumatic capsules made of a material absorbing moisture, fats, and dirt of natural or artificial origin.

The pneumatic capsules are of a disposable type.

A point of sale of goods and services is provided with video monitoring means 9, monitoring means using X-ray radiation, and monitoring means using infrared radiation, all connected through the telecommunications network of information and computer resources (the Internet) to one another and to the center collecting information about orders for required goods and services and managing delivery thereof.

The point of sale of goods and services is provided with electronic and mechanical means to prevent unauthorized access to the system, all said means being connected through the telecommunications network of information and computer resources (the Internet) to one another and to the center collecting information about orders made for required goods and services and managing delivery thereof.

Each terminal 1 determining goods and services available to the system is provided with device 8 that confirms and blocks reception and transmission of information packets received and sent, through the telecommunications network of information and computer resources (the Internet), to the other terminals determining goods and services available to the system and to the center collecting information about orders for required sales of goods and services and managing delivery thereof.

The pneumatic delivery means of each goods warehouse and each station distributing the goods ordered are provided with electronic and mechanical means to prevent unauthorized access of goods to the system, all connected through the telecommunications network of information and computer resources (the Internet) to one another and to the center collecting information about orders for required sales of goods and services and managing delivery thereof.

People today are spending more and more time at computer terminals at home and in office. Information, such as information about goods and services, is moving faster, and its search and retrieval speeds have grown. Still, opportunities for Internet or television shopping are just as limited as they were because of the significant time lag between the time when an order is made and the time when it is fulfilled. The market is rapidly responding to new trends. More goods are delivered by courier, and the number of corner shops is rising. All that is clearly far from enough. Today, there is a need and opportunities for orders to be delivered to customers' homes, offices, and other territorially distributed places by integrating the Internet, pneumatic or combined delivery, and modern payment systems and software.

The claimed vending system operates on the following principle.

Terminals 1 connected to the Internet and devices accepting cash and cashless payments in real time that are set up in public places such as houses (including residential houses), structures, streets, and other outdoor and indoor areas are connected to one another and to other terminals 1 set up in operating stores, drugstores, and other vending and catering outlets. Each terminal 1 is part of its point of sale where it interacts with its goods warehouse 2 and station 3 distributing the goods ordered, which station is provided with pneumatic delivery means that are connected to pneumatic tubes 4.

FIG.2 shows several terminals 1 connected to the Internet by communications channels. Terminal 1 is provided with display 5 having an active screen and device 6 for making cashless payment for goods and services in real time.

A buyer search for, and orders, goods through terminal 1 connected to the Internet using the active screen of display 5 presenting the full range of goods for sale and prices of goods sold and services offered by all the participants of that particular network. An order can be entered at home, in office, in the street, and in other places. Using the active screen and device 6, the buyer then pays online for the purchase in cash or by electronic funds transfer. After the seller has received information about the payment made, he uses his terminal 1 to send the good or service ordered to the buyer through pneumatic tube 4 of the entire system. The buyer at terminal 1 can see on the screen the time remaining to his order fulfillment, receive information about the fulfillment time of orders for other goods and services, place more orders, and receive orders through the pneumatic tube of the system and station 3. Terminals 1 set up on the streets, in underpasses, office buildings, and other public places can be equipped with several output devices 3. In this way, as one order is fulfilled other users may place orders and wait until successive orders are fulfilled.

An important advantage of the claimed vending system is that all users accessing terminals 1 having warehouses 8 can act successively as buyers, sellers, goods promotion agents, advertisers, and providers of other services. For example, a participant who acted as buyer in a preceding transaction at terminal 1 can, now as seller, send his goods in the next transaction from warehouse 2 to another terminal 1. The possibility of receiving goods from drugstores and pharmaceutics warehouses will help many users in critical situations. An important advantage of the system is that users can collect cash from financial institutions and refunds for the goods returned. The possibility of using the change due to payers to pay for other needs is a further advantage of the claimed system. The sealing washers of the pneumatic capsules (including disposable capsules) are made of material absorbing moisture, fats, and dirt to remove condensate and dirt.

The claimed system has sections provided with existing video, X-ray, infrared, and other monitoring systems in order to improve security of the claimed system.

In this case, each point of sale of goods and services is provided with video monitoring means 9, X-ray monitoring means, and infrared monitoring means, all connected through the telecommunications network of information and computer resources (the Internet) to one another and to the center collecting orders made for required goods and services and managing delivery thereof.

Moreover, each point of sale of goods and services is provided with electronic and mechanical means to prevent unauthorized access to the system, all said means being connected through the telecommunications network of information and computer resources (the Internet) to one another and to the center collecting information about orders for required goods and services and managing delivery thereof, and each terminal 1 determining goods and services available to the system being provided with device 8 confirming and blocking reception and transmission of information packets received and sent, through the telecommunications network of information and computer resources (the Internet) to the other terminals determining goods and services available to the system and to the center collecting information about orders for required sales of goods and services and managing delivery thereof.

An importance property of the present system is an opportunity it offers for using it for both vending and communication between users, for example, for sending gifts, handwritten messages, large volumes of information on solid media, document originals, and so on.

It is not difficult to design elements and components that are used in the present invention.

The center collecting information about orders made for required goods and services and managing delivery thereof can be based on a system for producing and distributing information about products on the Internet such as one disclosed in Russian Federation Patent No. 2,265,246, cl. G06F 17/60, 2005.

The terminal determining goods and services available to the system may be designed on the basis of devices, elements, and components disclosed in Russian Federation Patent No. 2,273,198, cl. H01 M 1/253, 2006.

A goods warehouse may be designed and built on the basis of technologies used in the automated system for making payments between parties to commercial transactions that is disclosed in Russian Federation Patent No. 2,278,412, cl. G06Q 20/00, 2006.

An ordered goods distribution station provided with pneumatic delivery means may be built from components disclosed in Russian Federation Patent No. 2,192,041, cl. G06F 17/60, 2000, and in Russian Federation Patent No. 2,155,990, cl. G06F 11/46, 2000.
The present invention helps expand the functional capabilities of the vending system by expanding the range of goods sold and services offered at points of sale, increasing the number of points of sale and locations of points of sale, enlarging the volume of information exchanged within the system, and improving standards of servicing when payments are made for goods and services and the goods are delivered to the buyer.

## Claims

1. A vending system comprising territorially distributed points of sale of goods and services that are connected to one another and to a center collecting information about orders for required goods and services and managing delivery thereof, each of said points of sale being provided with a terminal determining goods and service available to the system; a goods warehouse; and an ordered goods distribution station provided with pneumatic delivery means connected, at one side thereof, by pneumatic tubes to pneumatic delivery means of ordered goods distribution stations of other points of sale and, at the other side thereof, to pneumatic delivery means at the goods warehouse of its own point of sale of goods and services, all the terminals determining goods and services available to the system are connected, through a telecommunications network of information and computer resources, to one another and to the center collecting information about orders for required goods and services and managing delivery thereof; all the goods warehouses and ordered goods distribution stations that are part of the system being connected, through their electronic communications means, by their respective communications channels to the center collecting information about orders for required goods and services and managing delivery thereof, the goods warehouse and ordered goods distribution station of each point of sale being capable of exchanging information through their electronic communications means.

2. The vending system as claimed in claim 1, wherein a point of sale of goods and services is located in a residential house, or a structure, or in a street pavilion, or in an outdoor or indoor pavilion.

3. The vending system as claimed in claim 1, wherein the terminal determining goods and services available to the system is capable of making cashless and/or cash payment for goods and services in real time.

4. The vending system as claimed in claim 1, wherein the terminal determining goods and services available to the system is provided with a display having an active screen presenting the full range of goods and services available in the system.

5. The vending system as claimed in claim 4, wherein the active screen of the display can place and register thereon an order for required sales of goods and services available in the system at home, or in office, or outdoors.

6. The vending system as claimed in claim 1, wherein the terminal determining goods and services available to the system can be connected to an automated teller machine or another payment device located, for example, in a bank office, or an exchange office, or at a financial institution.

7. The vending system as claimed in claim 1, wherein the terminal determining goods and services available to the system can accept and return cash.

8. The vending system as claimed in claim 1, wherein the center collecting information about orders for goods and services and managing delivery thereof can process information about an order, including the goods code, order date, volume of the order, price of an item of goods, name of the point of sale, and name of the goods recipient.

9. The vending system as claimed in claim 1, wherein the pneumatic delivery means of the goods warehouses and ordered goods distribution stations can receive, deliver, and return the goods.

10. The vending system as claimed in claim 1, wherein the pneumatic delivery means of the goods warehouses and ordered goods distribution stations have pneumatic capsules made of material absorbing moisture, fats, and dirt of natural or artificial origin.

11. The vending system as claimed in claim 10, wherein pneumatic capsules are of a disposable type.

12. The vending system as claimed in claim 1, wherein the point of sale of goods and services is provided with video monitoring means, X-ray monitoring means, and infrared monitoring means, all said means being connected through the telecommunications network of information and computer resources (the Internet) to one another and to the center collecting information about orders made for required goods and services and managing delivery thereof.

13. The vending system as claimed in claim 1, wherein the point of sale of goods and services is provided with electronic and mechanical means to prevent unauthorized access to the system, all said means being connected through the telecommunications network of information and computer resources (the Internet) to one another and to the center collecting information about orders made for required goods and services and managing delivery thereof.

14. The vending system as claimed in claim 1, wherein each terminal determining goods and services available to the system is provided with a device to confirm and block reception and transmission of information packets received and sent, respectively, through the telecommunications network of information and computer resources (the Internet) to the other terminals determining goods and services available to the system and to the center collecting information about orders made for required sales of goods and services and managing delivery thereof.

15. The vending system as claimed in claim 1, wherein the pneumatic delivery means of each goods warehouse and each ordered goods delivery station are provided with electronic and mechanical means to prevent unauthorized access of goods to the system, all said means being connected through the telecommunications network of information and computer resources (the Internet) to one another and to the center collecting information about orders made for required sales of goods and services and managing delivery thereof.
